# EUROPEAN PATENT SPECIFICATION

(11) **EP 0 474 362 B1**
(45) Date of publication and mention of the grant of the patent: **21.09.1994**
(21) Application number: 91307147.8
(22) Date of filing: 02.08.1991
(51) Int. Cl.: G01P 3/44, G01D 21/02, G05D 13/62

(54) **Angular velocity sensing apparatus**
Vorrichtung zur Messung der Winkelgeschwindigkeit
Appareil pour détecter la vitesse angulaire

(30) Priority: 03.08.1990 GB 9017104
(43) Date of publication of application: 11.03.1992
(73) Proprietor: BRITISH AEROSPACE PUBLIC LIMITED COMPANY, Farnborough, Hants. GU14 6YU (GB)
(72) Inventor: Varnham, Malcolm P., British Aerospace Systems, Stevenage, Herts SG1 2DA (GB); Hodgins, Diana, British Aerospace Systems, Stevenage, Herts SG1 2DA (GB); Norris, Timothy S., British Aerospace Systems, Stevenage, Herts SG1 2DA (GB); Thomas, Huw D., British Aerospace Systems, Stevenage, Herts SG1 2DA (GB)
(74) Representative: Dowler, Edward Charles

(56) References cited:
- CH-A- 669 694
- DE-B- 1 214 892
- FR-A- 2 619 451
- GB-A- 1 402 497
- NTIS Tech Notes, February 1990, page 161, Springfield, VA, US; P. R. Christon et al: "Rapidly indexing incremental-angle encoder"

## Description

This invention relates to angular velocity sensing apparatus and to control systems incorporating such apparatus.

There are a number of applications where tachometers are used to control angular or linear motion. In many such applications it is essential that the tachometer exhibits good high frequency characteristics as well as low drift, i.e. stable low frequency characteristics. A typical situation where precise turning rate measurement is required is in picture scanning equipment where scanning velocity variations can cause raster-type distortion of the final image. Similarly, in colour printing, variations in the angular speed of the printing drum can cause registration errors between the colour images. Existing tachometers with sufficiently fine resolution and able to provide good high and low frequency characteristics for such applications do exist but are expensive.

There are lower cost tachometers such as optical encoders which give only limited resolution but these allow only the average angular velocity of a rotary member to be determined between discrete tachometer positions and this is not sufficient for many applications.

DE-B-1214892 and NTIS Tech Notes, February 1990, Page 161, Springfield, VA, USA, article entitled 'Rapidly-indexing incremental-angle decoder' by P R Christon et al, both disclose the use of low resolution and high resolution sensing apparatus to determine angular position. The high and low resolution outputs are combined to produce a high output signal in which errors are reduced.

It is an aim of the invention to provide angular velocity sensing apparatus for monitoring angular velocity which mitigates at least some of the above disadvantages.

According to the present invention there is provided angular velocity sensing apparatus for sensing the angular velocity of a rotary member, characterised by including a tachometer for providing a low resolution pulse train output with each pulse indicating a discrete angular position of the rotary member, an angular rate gyroscope for providing a continuous measure of angular velocity of the rotary member in the form of an output signal containing errors due to scale factor uncertainties and/or drift, and processing means operable to receive the tachometer output and the gyroscope output signal and derive a high accuracy average turning rate value at discrete tachometer sensing positions and to remove errors from the gyroscope output signal using the tachometer high accuracy average turning rate values so that a continuous high accuracy measurement of angular velocity is produced.

According to a further aspect of the present invention there is provided a velocity control system including an angular velocity sensing apparatus as hereinbefore described including drive means for driving said rotary member dependent on an error signal derived from the high accuracy angular velocity measurement and an input demand signal.

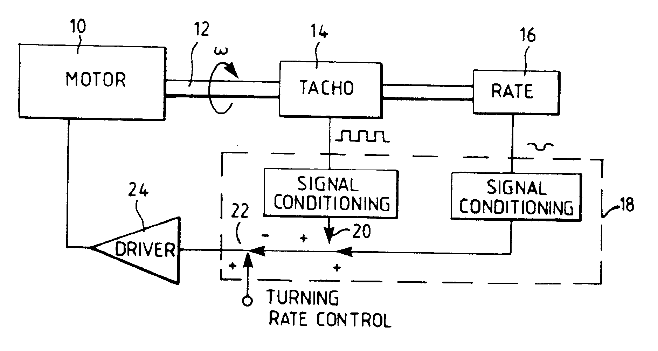

The invention may be performed in various ways and an embodiment thereof will now be described, by way of example only, with reference to the accompanying single figure drawing which is a schematic diagram of a tachometer enhancement system in accordance with the invention.

The diagram shows a system whereby an angular velocity, controlled by a simple, low cost tachometer, may be maintained constant during each revolution by using a low cost rate sensor in the control system.

In the drawing, a motor 10 drives a shaft 12 whose speed is monitored by a low resolution, low cost tachometer 14 and a rate gyro 16 situated on the same axis. Instead of both being connected direct to the shaft 12 and co-axial therewith, one or both of the tachometer 14 and gyro 16 could be coupled to the shaft 12 via a suitable mechanical coupling, for example a belt drive. The tachometer is in the form of a rotary position encoder which provides a pulse each time the shaft turns part one of a series of discrete tachometer sensing positions spaced equiangularly with respect to the shaft. The signals from the tachometer 14 and the rate gyro 16 are supplied to a processor 18 where they are controlled and combined at 20 to provide an accurate reading of the angular velocity of the motor 10. The combining of the signals within processor 18 is such that the tachometer removes scale factor errors and integrated drift rotation rates from the gyro signal. The velocity reading is compared with a demand supplied as a turning rate control signal at 22 to generate an error signal which is supplied to a motor drive circuit 24.

The tachometer 14 provides a pulse train output which allows only the average turning rate of the motor shaft 12 to be determined between discrete tachometer sensing positions. The output from the rate sensor 16 monitors any change in the angular velocity between the discrete tachometer sense positions giving a continuous measure of angular velocity. In general, the angular velocity signal will contain error terms owing to scale factor uncertainties and drift. These errors can be removed using the high accuracy tachometer data. The rate sensor signal thus produced can be used to generate an error signal. This error signal, by using some simple processing techniques, could either be fed back to control a motor speed (as in the drawing) or be used to modify the output motion in accordance with the variation in the motor speed. This could be achieved by using an appropriate processing technique. The processing techniques required are believed to be within the competence of one skilled in the art.

The illustrated embodiment permits the use of a low-cost rate sensor which may exhibit satisfactory high-frequency performance but poor drift and scale factor characteristics; the low frequency measurement properties of the rate gyro are not important since cumulative drift is well controlled by the tachometer.

It will be understood that the system may also be operated as an angular displacement sensor as well as an angular velocity sensor, with the output from the tachometer 14 identifying an integral number of tachometer sensing positions and the output from the rate gyro 16 being integrated over a variable time base to allow the increment between the adjacent sensing positions to be determined. Additionally the apparatus may be used to determine a linear velocity or displacement of a member connected to the shaft 14 by a suitable drive train.

The signal processor 18 could comprise one or more integrating elements, an analog to digital converter or a digital to analog converter, together with appropriate logic elements. For example, the rate signal from gyro 16 could be integrated to form a rotation magnitude signal and then digitised before being combined digitally with the signal from tachometer 14. As another example, the pulse signal from tachometer 14 could be averaged to give a velocity dependent signal and then combined digitally or otherwise with the gyro signal. Processor 18 could be a computer, for example a microprocessor based computer.

## Claims

1. Angular velocity sensing apparatus for sensing the angular velocity of a rotary member (12), characterised by including a tachometer (14) for providing a low resolution pulse train output with each pulse indicating a discrete angular position of the rotary member (12), an angular rate gyroscope (16) for providing a continuous measure of angular velocity of the rotary member (12) in the form of an output signal containing errors due to scale factor uncertainties and/or drift, and processing means (18) operable to receive the tachometer output and the gyroscope output signal and derive a high accuracy average turning rate value at discrete tachometer sensing positions and to remove errors from the gyroscope output signal using the tachometer high accuracy average turning rate values so that a continuous high accuracy measurement of angular velocity is produced.

2. A velocity control system including an angular velocity sensing apparatus according to claim 1, including drive means (10) for driving said rotary member (12) dependent on an error signal derived from the high accuracy angular velocity measurement and an input demand signal.

## Patentansprüche

1. Vorrichtung zum Messen der Winkelgeschwindigkeit eines sich drehenden Teiles (12),
dadurch gekennzeichnet, daß ein Tachometer (14) vorgesehen ist, um einen Impulsfolgeausgang geringer Auflösung zu liefern, wobei jeder Impuls eine diskrete Winkelstellung des drehbaren Bauteiles (12) anzeigt, daß ein Winkelgeschwindigkeits-Gyroskop (16) eine kontinuierliche Messung der Winkelgeschwindigkeit des sich drehenden Bauteils (12) in Form eines Ausgangssignals liefert, welches Fehler infolge von Ungewißheiten des Skalierungsfaktors und/oder der Abdrift enthält, und daß ein Prozessor (18) den Tachometerausgang und das Gyroskop-Ausgangssignal empfängt und einen durchschnittlichen Drehgeschwindigkeitswert hoher Genauigkeit an diskreten Tachometersensorstellungen liefert und Fehler aus dem Gyroskop-Ausgangssignal unter Benutzung der Durchschnitts-Drehgeschwindigkeitswerte hoher Genauigkeit ausmärzt, so daß eine kontinuierliche Messung der Winkelgeschwindigkeit mit hoher Genauigkeit erzeugt wird.

2. Geschwindigkeitssteuersystem mit einer Vorrichtung zur Messung der Winkelgeschwindigkeit nach Anspruch 1, bei dem ein Antrieb (10) vorgesehen ist, der das drehbare Bauteil (12) in Abhängigkeit von einem Fehlersignal antreibt, welches aus der Winkelgeschwindigkeitsmessung und einem Eingangssollwert-Signal abgeleitet wird.

## Revendications

1. Appareil de détection de vitesse angulaire destiné à détecter la vitesse angulaire d'un élément rotatif (12), caractérisé en ce qu'il comporte un tachymètre (14) destiné à fournir une sortie formant train d'impulsions de résolution faible, chaque impulsion indiquant une position angulaire discrète de l'élément rotatif (12), un gyroscope (16) pour vitesse angulaire pour fournir une mesure continue de la vitesse angulaire de l'élément rotatif (12) sous la forme d'un signal de sortie contenant des erreurs dues à des imprecisions du facteur d'échelle et/ou une dérive, et des moyens de traitement (18) pouvant être actionnés pour recevoir la sortie du tachymètre et le signal de sortie du gyroscope et dériver une valeur de la vitesse moyenne de rotation très précise au niveau de positions discrètes de détection du tachymètre et pour supprimer les erreurs provenant du signal de sortie du gyroscope en utilisant les valeurs très précises de la vitesse moyenne de rotation du tachymètre de sorte qu'une mesure continue très précise de la vitesse angulaire soit obtenue.

2. Dispositif de commande de vitesse comportant un appareil de détection de la vitesse angulaire selon la revendication 1, comportant des moyens d'entraînement (10) destinés à entraîner ledit élément rotatif (12) en fonction d'un signal d'erreur dérivé de la mesure de la vitesse angulaire avec une précision élevée et d'un signal de demande d'entrée.
